# EUROPEAN PATENT APPLICATION

(11) **EP 3 683 862 A1**
(43) Date of publication of application: **22.07.2020**
(21) Application number: 18855231.9
(22) Date of filing: 31.08.2018
(51) Int. Cl.: H01M 2/18, H01M 2/16, H01M 10/0585

(54) **SEPARATOR FOR LITHIUM ION BATTERY**

(30) Priority: 14.09.2017 JP 2017176783
(71) Applicant: Nissan Motor Co., Ltd., Yokohama-shi, Kanagawa 221-0023 (JP)
(72) Inventor: OKURA, Masatoshi, Kyoto-shi Kyoto 605-0995 (JP); KOIKE, Masanori, Kyoto-shi Kyoto 605-0995 (JP); KABURAGI, Tomohiro, Atsugi-shi Kanagawa 243-0123 (JP); YODA Kazuyuki, Atsugi-shi Kanagawa 243-0123 (JP); KUSACHI, Yuki, Atsugi-shi Kanagawa 243-0123 (JP); OHSAWA, Yasuhiko, Atsugi-shi Kanagawa 243-0123 (JP); MINEGISHI, Eiji, Atsugi-shi Kanagawa 243-0123 (JP)
(74) Representative: Grünecker Patent- und Rechtsanwälte PartG mbB
(86) International application number: PCT/JP2018/032491
(87) International publication number: WO 2019/054216

(57) **Abstract**

The present invention provides a separator for lithium ion battery capable of achieving both excellent handling properties and suppression of thermal deformation without changing the thickness of the separator. The present invention is a separator for a lithium ion battery, the separator being disposed between a flat-plate-like positive electrode collector and a flat-plate-like negative electrode collector. The separator for a lithium ion battery is characterized by comprising: a sheet-like separator body a polyolefin porous membrane; and a frame-like member that is arranged annularly along the outer periphery of the separator body, wherein the frame-like member a heat-resistant annular support member and a seal layer that is disposed on the surface of the heat-resistant annular support member and is capable of thermocompression bonding with the positive electrode collector or the negative electrode collector.

## Description

### TECHNICAL FIELD

The present invention relates to a separator for lithium ion battery.

### BACKGROUND ART

In recent years, a reduction in carbon dioxide emission amount has been strongly desired for environmental protection. In the automobile industry, a reduction in the carbon dioxide emission amount by the introduction of an electric vehicle (EV) and a hybrid electric vehicle (HEV) has been expected. The development of a motor driving secondary battery which is the key to the practical use thereof has been extensively performed. As the secondary battery, a lithium ion battery (which is also referred to as a lithium ion secondary battery) capable of achieving a high energy density and a high power density has drawn attention.

As a separator which is a member preventing a short circuit between a positive electrode and a negative electrode among materials configuring the lithium ion battery, those containing a polyolefin porous membrane as a base material have been mostly used from the viewpoint of safety. The polyolefin porous membrane has a function (shutdown function) of improving the safety of the battery by melting to close holes to thereby increase the internal resistance of the battery when the battery rapidly generates heat by a short circuit, overcharging, or the like.

On the other hand, the polyolefin porous membrane which is a separator base material forms the porous structure by stretching, and therefore has a characteristic of causing shrinkage·deformation (hereinafter also referred to as thermal deformation) when heated to equal to or larger than a predetermined temperature (shrinkage temperature). Therefore, there is a risk that the temperature of the separator base material exceeds the shrinkage temperature due to heat generation by the use of the battery or heat applied in manufacturing of the battery, so that the thermal deformation is caused, and thus an internal short circuit occurs.

As a separator capable of preventing the internal short circuit due to the thermal deformation, a separator described in International Publication No. WO2007/66768 (equivalent to United States Patent Application Publication No. 2007/0264577, Specification) has been proposed. In detail, the separator is disclosed which contains a first separator layer containing a resin A having a melting point of 80 to 130°C and a resin B absorbing a nonaqueous electrolytic solution to expand by heating and a second separator layer mainly containing a filler having a heat resistant temperature of 150°C or more and in which at least one of the first separator layer and the second separator layer contains plate-like particles.

### SUMMARY OF INVENTION

From the viewpoint of the electric capacity of the lithium ion battery, the ratio of an electrode active material to the entire lithium ion battery is preferably high. Moreover, the separator has been demanded to reduce the thickness from the viewpoint of reducing the ion resistance between the electrodes. However, there has been a problem that, with a reduction in the thickness of the separator, the handling properties thereof decrease, the positioning in lamination becomes difficult, or wrinkles are likely to occur.

On the other hand, the separator capable of preventing the internal short circuit due to the thermal deformation disclosed in International Publication No. WO2007/66768 (equivalent to United States Patent Application Publication No. 2007/0264577, Specification) is a laminate, and therefore the thickness of the separator is likely to be large as compared with the thickness of conventional separators. Therefore, although the handling properties of the separator are improved, there has been a problem that the ratio of the electrode active material to the entire lithium ion battery decreases corresponding to an increase in the volume of the separator to the entire lithium ion battery, and thus it becomes difficult to increase the capacity.

The present invention has been made in view of the above-described problems. It is an object of the present invention to provide a separator for lithium ion battery capable of achieving both excellent handling properties and suppression of thermal deformation without changing the thickness of the separator.

The present inventors have reached the present invention as a result of conducting an extensive examination in order to solve the above-described problems. More specifically, the present invention is a separator for lithium ion battery disposed between a flat plate-like positive electrode collector and a flat plate-like negative electrode collector. The separator of the present invention contains a sheet-like separator body containing a polyolefin porous membrane and a frame-like member annularly disposed along the outer periphery of the separator body. The present invention relates to a separator for lithium ion battery in which the frame-like member contains a heat resistant annular support member and a seal layer which is disposed on the surface of the heat resistant annular support member and which can be thermocompression-bonded to the positive electrode collector or the negative electrode collector.

### BRIEF DESCRIPTION OF DRAWINGS

[FIGS. 1] FIG. 1(a) is a perspective view schematically illustrating an example of a separator for lithium ion battery of the present invention and FIG. 1(b) is a cross-sectional view along the A-A line in FIG. 1(a).
[FIGS. 2] FIG. 2(a) and FIG. 2(b) each are cross-sectional views schematically illustrating an example of the configuration of a frame-like member configuring the separator for lithium ion battery of the present invention.
[FIGS. 3] FIG. 3(a) to FIG. 3(e) are cross-sectional views illustrating examples of the positional relationship between a separator body configuring the separator for lithium ion battery of the present invention and each layer configuring the frame-like member.
[FIGS. 4] FIG. 4(a) to FIG. 4(f) are explanatory views schematically illustrating an example of a method for manufacturing a lithium ion battery using the separator for lithium ion battery of the present invention.
[FIG. 5] FIG. 5 is an explanatory view schematically illustrating an example of the lithium ion battery provided with the separator for lithium ion battery of the present invention.
[FIG. 6] FIG. 6 is an explanatory view schematically illustrating another example of the lithium ion battery provided with the separator for lithium ion battery of the present invention.

### DESCRIPTION OF EMBODIMENTS

Hereinafter, the present invention is described in detail. In this specification, a description of a lithium ion battery means a concept also including a lithium ion secondary battery.

A separator for lithium ion battery of the present invention is a separator for lithium ion battery disposed between a flat plate-like positive electrode collector and a flat plate-like negative electrode collector. The separator of the present invention contains a sheet-like separator body containing a polyolefin porous membrane and a frame-like member annularly disposed along the outer periphery of the separator body. The frame-like member contains a heat resistant annular support member and a seal layer which is disposed on the surface of the heat resistant annular support member and which can be thermocompression-bonded to the positive electrode collector or the negative electrode collector. Due to such a configuration, the separator for lithium ion battery of the present invention can achieve both excellent handling properties and suppression of thermal deformation without changing the thickness of the separator.

The separator for lithium ion battery of the present invention may be used for a wound type lithium ion battery (hereinafter also simply referred to as a wound type battery) or may be used for a laminated type (non-wound type) lithium ion battery (hereinafter also simply referred to as a laminated type battery). When considering that accuracy is required particularly for the handling of the separator when manufacturing the laminated type battery, the separator for lithium ion battery of the present invention is desirably used for the laminated type (non-wound type) lithium ion battery.

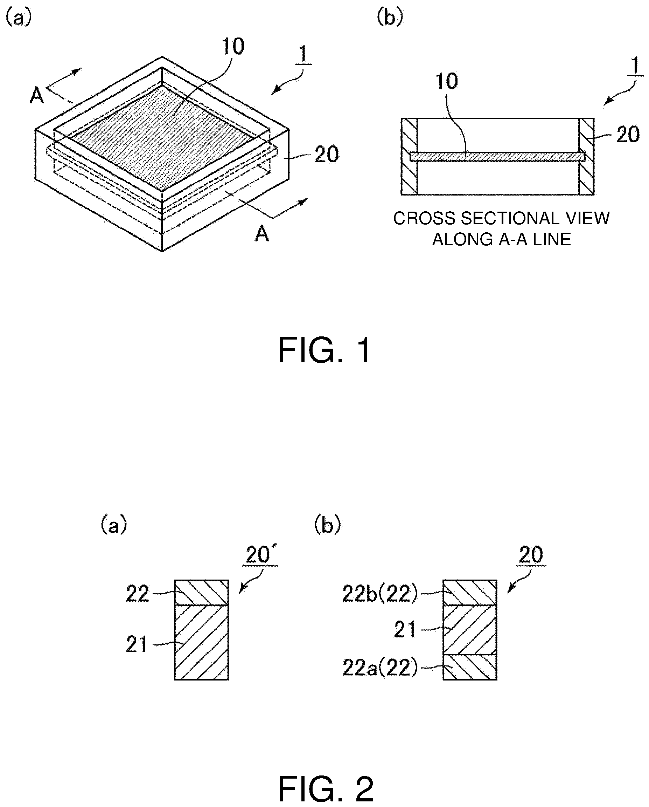

The configuration of the separator for lithium ion battery of the present invention is described using FIG. 1(a) and FIG. 1(b). FIG. 1(a) is a perspective view schematically illustrating an example of the separator for lithium ion battery of the present invention. FIG. 1(b) is a cross-sectional view along the A-A line in FIG. 1(a). As illustrated in FIG. 1(a), a separator for lithium ion battery 1 contains a flat plate-like separator body 10 and a frame-like member 20 annularly disposed along the outer periphery of the separator body 10. As illustrated in FIG. 1(a) and FIG. 1(b), the outside dimension of the frame-like member 20 is larger than the outside dimension of the separator body 10, and therefore the side surface of the separator body 10 is covered with the frame-like member 20.

Subsequently, the configuration of the frame-like member configuring the separator for lithium ion battery of the present invention is described using FIG. 2(a) and FIG. 2(b). FIG. 2(a) and FIG. 2(b) are cross-sectional views each schematically illustrating an example of the configuration of the frame-like member configuring the separator for lithium ion battery of the present invention. The frame-like member (20', 20) configuring the separator for lithium ion battery contains a heat resistant annular support member 21 and a seal layer 22 which is disposed on the surface thereof and which can be thermocompression-bonded to the positive electrode collector or the negative electrode collector as illustrated in FIG. 2(a) and FIG. 2(b). As illustrated in FIG. 2(b), the seal layer 22 configuring the frame-like member 20 may contain a first seal layer 22a which can be thermocompression-bonded to the positive electrode collector and a second seal layer 22b which can be thermocompression-bonded to the negative electrode collector. The frame-like member 20 may be a laminate in which the heat resistant annular support member 21 is disposed between the first seal layer 22a and the second seal layer 22b. In the frame-like members illustrated in FIG. 2(a) and FIG. 2(b), the illustration of the separator body is omitted but the position where the separator body is disposed is not particularly limited.

In the separator for lithium ion battery of the present invention, the frame-like member annularly disposed along the outer periphery of the separator body supports the separator body, and therefore the handling properties are excellent as compared with those in a case where the separator body is provided alone. Even in a case where the separator body is exposed to a condition where the separator body causes thermal deformation, the thermal deformation of the separator body can be suppressed because the heat resistant annular support member holds the shape. Moreover, the frame-like member is disposed only in an outer peripheral portion of the separator body, and therefore the thickness of the separator body placed between a positive electrode active material layer and a negative electrode active material layer is kept thin, so that the ion resistance between the electrodes is not increased. Therefore, the separator for lithium ion battery of the present invention can achieve both excellent handling properties and suppression of thermal deformation without changing the thickness of the separator. The seal layer formed on the surface of the heat resistant annular support member enables bonding between the separator for lithium ion battery of the present invention and the collector. Therefore, when the separator for lithium ion battery and the collector are bonded to each other, it is not necessary to separately prepare an adhesive, so that a manufacturing process can be simplified.

Although the surface of the heat resistant annular support member refers to a surface facing the collector of the heat resistant annular support member, the seal layer may be disposed also on a surface other than the surface (for example, the outside surface or the inside surface of the heat resistant annular support member). More specifically, the seal layer may be disposed only on the surface facing the collector of the heat resistant annular support member or may be disposed also on the other surfaces.

The heat resistant annular support member desirably contains a heat resistant resin composition having a melting temperature of 150°C or more and more desirably contains a heat resistant resin composition having a melting temperature of 200°C or more. Due to the fact that the heat resistant annular support member contains the heat resistant resin composition having a melting temperature of 150°C or more, the frame-like member is more hard to be deformed by heat. The melting temperature (also simply referred to as "melting point") of the heat resistant resin composition is measured by differential scanning calorimetry according to JIS K7121-1987.

In the separator for lithium ion battery of the present invention, examples of a resin configuring the heat resistant resin composition include a thermosetting resin (epoxy resin, polyimide, and the like), an engineering resin [polyamide (Nylon 6, Melting temperature: about 230°C, Nylon 66, Melting temperature: about 270°C, and the like), polycarbonate (also referred to as "PC", Melting temperature: about 150°C), polyetheretherketone (also referred to as "PEEK", Melting temperature: about 330°C), and the like], a high melting point thermoplastic resin {polyethylene terephthalate (also referred to as "PET", Melting temperature: about 250°C), polyethylene naphthalate (also referred to as "PEN", Melting temperature: about 260°C), high melting point polypropylene (melting temperature: about 160 to 170°C), and the like)}, for example. The high melting point thermoplastic resin refers to a thermoplastic resin having a melting temperature measured by differential scanning calorimetry according to JISK7121-1987 of 150°C or more.

In the separator for lithium ion battery of the present invention, the heat resistant resin composition desirably contains at least one kind of resin selected from the group consisting of polyamide, polyethylene terephthalate, polyethylene naphthalate, high melting point polypropylene, polycarbonate, and polyetheretherketone.

In the separator for lithium ion battery of the present invention, the heat resistant resin composition may contain a filler. Due to the fact that the heat resistant resin composition contains a filler, the melting temperature can be increased. Examples of the filler include inorganic fillers, such as glass fibers, carbon fibers, and the like. Examples of the heat resistant resin composition containing the filler include one obtained by impregnating glass fibers with an epoxy resin before curing, and then curing it (which is also referred to as glass epoxy), a carbon fiber reinforced resin, and the like.

Even when the frame-like member configuring the separator for lithium ion battery of the present invention is a laminate in which the heat resistant annular support member is disposed between the first seal layer and the second seal layer, the laminate is merely disposed along the outer peripheral portion of the separator body configuring the separator for lithium ion battery of the present invention. More specifically, a center portion of the separator for lithium ion battery of the present invention does not have the laminated structure described in International Publication No. WO2007/66768 (equivalent to United States Patent Application Publication No. 2007/0264577, Specification). Therefore, the internal resistance of the battery can be reduced.

In the separator for lithium ion battery of the present invention, the seal layer configuring the frame-like member may be a monolayer structure or a double layer structure. More specifically, the seal layer may contain the first seal layer which can be thermocompression-bonded to the positive electrode collector and the second seal layer which can be thermocompression-bonded to the negative electrode collector.

Materials configuring the seal layer may be those which can be thermocompression-bonded to collectors. For example, polyolefin is desirably contained. Examples of the polyolefin configuring the seal layer includes a commercially available polyolefin hot melt adhesive resin [ADMER (Registered Trademark) manufactured by Mitsui Chemicals, Inc., Melthene (Registered Trademark) manufactured by TOSOH CORPORATION, and the like], low melting point polyethylene, and the like, for example. When the seal layer has the double layer structure, materials configuring the first seal layer and the second seal layer may be the same or may be different from each other. The low melting point polyethylene refers to polyethylene having a melting temperature measured by differential scanning calorimetry according to JIS K7121-1987 of less than 150°C. From the viewpoint of suppressing a temperature increase of the separator body in thermocompression-bonding, the melting temperature of the low melting point polyethylene used for the seal layer is preferably 100°C or less. The low melting point polyethylene which can be used for the separator for lithium ion battery of the present invention includes a commercially available low density polyethylene resin, a high density polyethylene resin, and the like.

In the separator for lithium ion battery of the present invention, the thickness of the frame-like member is not particularly limited and is desirably 60 to 600 µm.

In the separator for lithium ion battery of the present invention, the thickness of the seal layer is not particularly limited and is desirably 10 to 100 µm in total. When the thickness of the seal layer is 10 to 100 µm, the adhesiveness with the collector is improved, and thus the thickness is preferable.

In the separator for lithium ion battery of the present invention, the thickness of the heat resistant annular support member is not particularly limited and is desirably 50 to 500 µm. When the thickness of the heat resistant annular support member is 50 to 500 µm, thermal deformation is hard to occur, and thus the thickness is preferable. The heat resistant annular support member may contain two or more layers. When the heat resistant annular support member contains two or more layers, the separator body may be disposed between the heat resistant annular support members.

In the separator for lithium ion battery of the present invention, a method for joining the separator body and the frame-like member is not particularly limited. The separator body and the frame-like member may be joined by an adhesive or may be joined using a part of the seal layer which can be thermocompression-bonded to the positive electrode collector or the negative electrode collector. Examples of the adhesive include the above-described commercially available polyolefin hot melt adhesive resin, low melting point polyethylene, and the like. Moreover, the separator body and the frame-like member can be joined also by directly producing the frame-like member on the separator body by a method including applying a raw material in a melted state of the frame-like member onto the separator body, followed by cooling, for example.

In the separator for lithium ion battery of the present invention, the thickness of the sheet-like separator body containing the polyolefin porous membrane is not particularly limited and is desirably 10 to 1000 µm.

In the separator for lithium ion battery of the present invention, known separators for lithium ion battery containing porous polyolefin [HIPORE (Registered Trademark) manufactured by Asahi Kasei Corporation., Celgard (Registered Trademark) manufactured by Asahi Kasei Corporation., UPORE (Registered Trademark) manufactured by Ube Industries, Ltd., and the like] are usable as the separator body.

The plan-view shape of the separator for lithium ion battery of the present invention is not particularly limited and polygonal shapes, such as a triangular shape, a quadrangular shape, and a pentagonal shape, a circular shape, an oval shape, and the like are mentioned. The shapes of the separator body and the frame-like member configuring the separator for lithium ion battery of the present invention may be adjusted in accordance with the shapes of the collectors (positive electrode collector and negative electrode collector) combined with the separator for lithium ion battery of the present invention and the shape of a battery outer casing housing the separator for lithium ion battery of the present invention or the like.

It is desirable that the outside dimension of the separator body in a top view is larger than the inside dimension of the frame-like member and is equal to or less than the outside dimension of the frame-like member from the relationship of the connection between the separator body and the frame-like member. As the outside dimension of the separator body satisfying the above-described conditions, a dimension larger than the inside dimension of the frame-like member and smaller than the outside dimension thereof and the same dimension as the outside dimension of the frame-like member are mentioned, for example. Among the above, the dimension larger than the inside dimension of the frame-like member and smaller than the outside dimension thereof is more desirable. When the outside dimension of the separator body is larger than the inside dimension of the frame-like member and smaller than the outside dimension thereof, the separator body and the frame-like member are joined with a sufficient area. Therefore, the frame-like member does not peel from the separator body due to a thermal stress in sealing. On the other hand, when the outside dimension of the separator body is larger than the outside dimension of the frame-like member, the separator body protrudes toward the outside from the frame-like member. Therefore, space not required when manufacturing the lithium ion battery is formed, which causes a reduction in energy density in some cases. When the outside dimension of the separator body is the same as the outside dimension of the frame-like member, the separator body is exposed to the side surface of the separator for lithium ion battery. Therefore, in order to prevent a leakage of the electrolytic solution from the separator body or the like, measures may be separately needed in some cases.

In the separator for lithium ion battery of the present invention, the positional relationship between the separator body and the frame-like member is not particularly limited. For example, the separator body may be disposed on the surface of the first seal layer (side opposite to the heat resistant annular support member). The separator body may be disposed between the first seal layer and the heat resistant annular support member or the separator body may be disposed in the middle of the heat resistant annular support member (between a first heat resistant annular support member and a second heat resistant annular support member). Furthermore, the separator body may be disposed between the heat resistant annular support member and the second seal layer or may be disposed on the surface of the second seal layer (side opposite to the heat resistant annular support member). When the separator body is disposed on the surface of the first seal layer (side opposite to the heat resistant annular support member) and when the separator body is disposed on the surface of the second seal layer (side opposite to the heat resistant annular support member), the frame-like member is entirely disposed only on one side of the separator body. When the handling properties of the separator for lithium ion battery are considered, the separator body desirably directly contacts the heat resistant annular support member. The separator body is more desirably disposed in the middle of the heat resistant annular support member (between the first heat resistant annular support member and the second heat resistant annular support member).

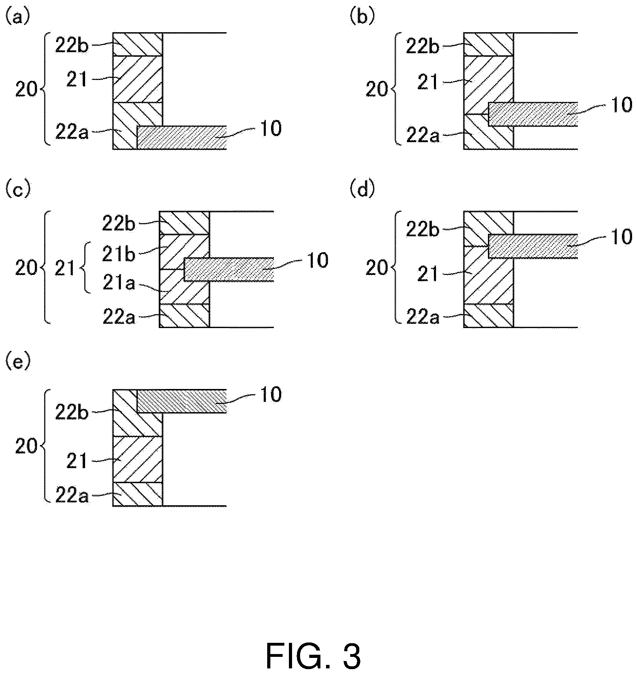

The positional relationship between the separator body and each layer (first seal layer, second seal layer, and heat resistant annular support member) configuring the frame-like member in the separator for lithium ion battery of the present invention is described with examples using FIG. 3(a) to FIG. 3(e). FIG. 3(a) to FIG. 3(e) explain a case where the outside dimension of the separator body is larger than the inside dimension of the frame-like member and smaller than the outside dimension thereof. FIG. 3(a) to FIG. 3(e) are cross-sectional views illustrating examples of the positional relationship between the separator body configuring the separator for lithium ion battery of the present invention and each layer configuring the frame-like member. In FIG. 3(a), the separator body 10 is disposed so as to contact only the first seal layer 22a. In FIG. 3(b), the separator body 10 is disposed between the first seal layer 22a and the heat resistant annular support member 21. In FIG. 3(c), the separator body 10 is disposed between a first heat resistant annular support member 21a and a second heat resistant annular support member 21b configuring the heat resistant annular support member 21. In FIG. 3(d), the separator body 10 is disposed between the heat resistant annular support member 21 and the second seal layer 22b. In FIG. 3(e), the separator body 10 is disposed so as to contact only the second seal layer 22b.

### [Method for manufacturing separator for lithium ion battery]

A method for manufacturing the separator for lithium ion battery of the present invention is not particularly limited. For example, a method including separately producing the plate-like separator body and the frame-like member, and then combining them, a method including successively laminating each layer configuring the frame-like member on the surface of the plate-like separator body, and the like are mentioned.

As a method for disposing the frame-like member on the outer periphery of the separator body, (1) a method is mentioned which includes molding a material used for each layer configuring the frame-like member into a film shape, cutting the materials into a predetermined shape, and then bonding the materials to the outer periphery of the separator body with an adhesive or the like as necessary. (2) A method is mentioned which includes cutting a film configuring each layer of the frame-like member into a predetermined shape, heating and melting the films, and then bonding the films to the outer periphery of the separator body. (3) A method including forming a laminate of each layer configuring the frame-like member into a multilayer film, and then bonding the multilayer film to the separator body and the like are mentioned. As the adhesive, the above-described commercially available polyolefin hot melt adhesive resin, low melting point polyethylene, and the like are mentioned. A method for molding a material configuring each layer into a film shape is not particularly limited. For example, an inflation method, a T-die method, a solution casting method, a calendar method, and the like are mentioned. The film obtained by these methods may be stretched, for example, as necessary. The stretching may be uniaxial stretching or may be biaxial stretching. Moreover, a commercially available film may be cut into a predetermined shape and used.

When the film configuring each layer of the frame-like member is heated and melted, and then bonded to the outer periphery of the separator body, known thermocompression bonding devices [heating roll, heat sealers (impulse sealer and the like), for example] are usable. From the viewpoint of suppressing the thermal deformation of the separator body, it is preferable to heat and press-bond only a portion where the frame-like member is disposed. It is more preferable to thermally press-bond only a portion serving as the frame-like member by the heat sealers (impulse sealer, for example).

As a method for successively laminating each layer configuring the frame-like member directly on the separator body, a raw material solution serving as the heat resistant annular support member is applied to one surface of the separator body, and then drying the solution to thereby form the heat resistant annular support member, for example. Furthermore, a raw material solution serving as the first seal layer is applied onto the surface of the heat resistant annular support member, and then drying the solution to form the first seal layer. A method is mentioned which includes subsequently rotating the separator body, and then laminating the heat resistant annular support member and the second seal layer to a surface on which the first seal layer is not formed in the same procedure as the first seal layer. The size and the arrangement of the heat resistant annular support member, the first seal layer, and the second seal layer can be adjusted as appropriate in accordance with the positions of the frame-like member and the separator body in a separator for lithium ion battery to be obtained.

### [Method for manufacturing lithium ion battery]

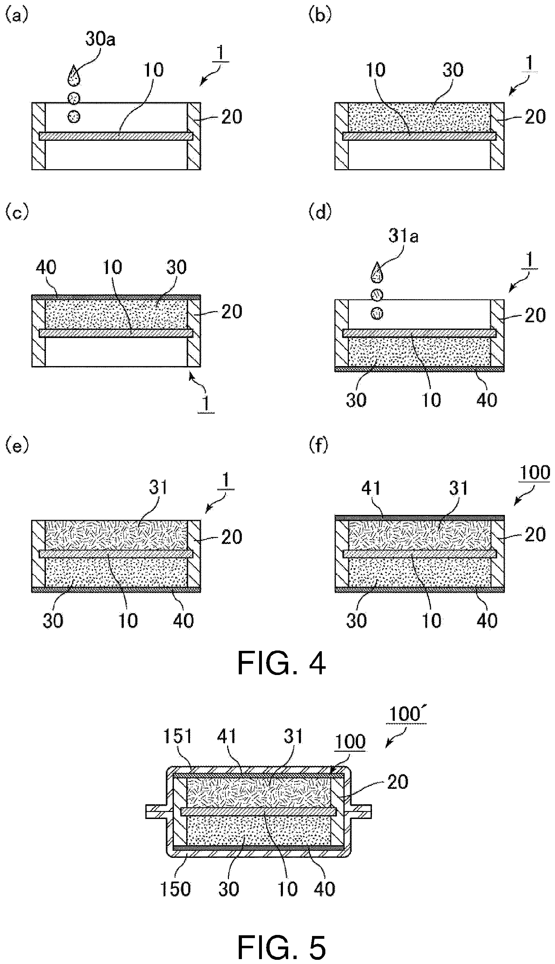

Subsequently, a method for manufacturing a lithium ion battery using the separator for lithium ion battery of the present invention is described. The method for manufacturing a lithium ion battery using the separator for lithium ion battery of the present invention is performed by processes illustrated in FIG. 4(a) to FIG. 4(f), for example. FIG. 4(a) to FIG. 4(f) are explanatory views schematically illustrating an example of the method for manufacturing a lithium ion battery using the separator for lithium ion battery of the present invention. As illustrated in FIG. 4(a), a raw material (positive electrode composition) 30a serving as the positive electrode active material layer is first given to one surface of the separator for lithium ion battery 1. By this process, a positive electrode active material layer 30 is formed in a region surrounded by the separator body 10 and the frame-like member 20 as illustrated in FIG. 4(b). Subsequently, a positive electrode collector 40 is disposed so as to cover the positive electrode active material layer 30 and the frame-like member 20 as illustrated in FIG. 4(c). Thereafter, the separator for lithium ion battery 1, the positive electrode active material layer 30, and the positive electrode collector 40 are reversed, and then a raw material (negative electrode composition) 31a serving as the negative electrode active material layer is given onto the separator body 10 on the side where the positive electrode active material layer 30 is not formed as illustrated in FIG. 4(d). By this process, a negative electrode active material layer 31 is formed in a region surrounded by the separator body 10 and the frame-like member 20 as illustrated in FIG. 4(e). Subsequently, the negative electrode collector 41 is disposed so as to cover the negative electrode active material layer 31 and the frame-like member 20 as illustrated in FIG. 4(f). By passing through the processes illustrated in FIG. 4(a) to FIG. 4(e), the lithium ion battery 100 illustrated in FIG. 4(f) is obtained. The lithium ion battery 100 illustrated in FIG. 4(f) is not housed in a battery outer casing but may be housed in the battery outer casing as necessary. When housed in the battery outer casing, two or more of the lithium ion batteries 100 may be laminated in series or in parallel.

An example in which the lithium ion battery 100 illustrated in FIG. 4(f) is housed in the battery outer casing is described using FIG. 5. FIG. 5 is an explanatory view schematically illustrating an example of the lithium ion battery provided with the separator for lithium ion battery of the present invention. In a lithium ion battery 100' illustrated in FIG. 5, the lithium ion battery 100 illustrated in FIG. 4(f) is covered with a positive electrode outer casing 150 and a negative electrode outer casing 151 which are the battery outer casings. The positive electrode outer casing 150 and the negative electrode outer casing 151 are electrically connected to the corresponding collectors (positive electrode collector 40 and negative electrode collector 41), respectively. Meanwhile, an insulating resin layer (not illustrated) is formed in a portion contacting the battery outer casing, so that the positive electrode outer casing 150 and the negative electrode outer casing 151 are insulated.

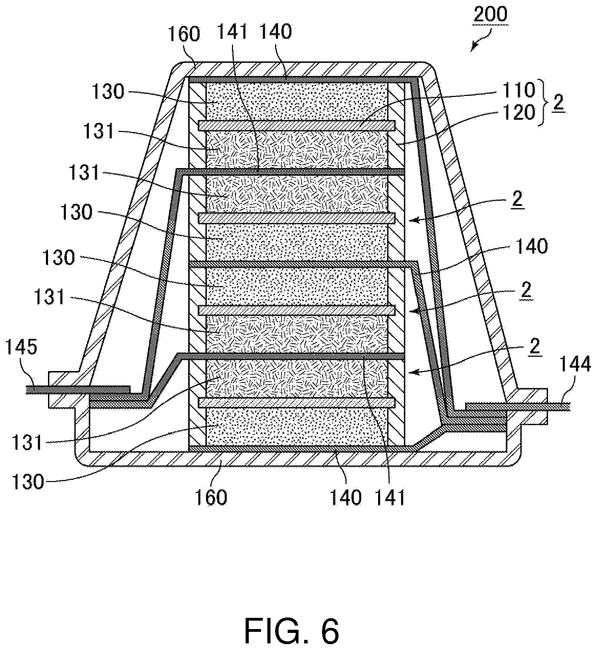

An example of a lithium ion battery in which the lithium ion battery 100 illustrated in FIG. 4(f) is a battery unit and two or more of the lithium ion batteries 100 are connected in parallel is described using FIG. 6. FIG. 6 is an explanatory view schematically illustrating another example of the lithium ion battery provided with the separator for lithium ion battery of the present invention. In a lithium ion battery 200 illustrated in FIG. 6, four separators for lithium ion battery 2 in which a frame-like member 120 is disposed in an outer peripheral portion of a separator body 110 are laminated through positive electrode collectors 140 or negative electrode collectors 141 in a battery outer casing 160 having an insulation inner surface. A positive electrode active material layer 130 is formed between each separator body 110 and each positive electrode collector 140. A negative electrode active material layer 131 is formed between each separator body 110 and each negative electrode collector 141. The battery unit (the same structure as that of the lithium ion battery 100 illustrated in FIG. 4(f)) functioning as a lithium ion battery is configured by the separator for lithium ion battery 2, a positive electrode structure adjacent to the separator 2, and a negative electrode structure adjacent to the separator 2. The positive electrode structure adjacent to the separator 2 is configured from the positive electrode collector 140 adjacent to the separator for lithium ion battery 2 and the positive electrode active material layer 130 formed between the separator for lithium ion battery 2 and the positive electrode collector 140. The negative electrode structure adjacent to the separator 2 is configured from the negative electrode collector 141 adjacent to the separator for lithium ion battery 2 and the negative electrode active material layer 131 formed between the separator for lithium ion battery 2 and the negative electrode collector 141. In the lithium ion battery 200, all the positive electrode collectors 140 are connected to an external terminal 144 exposed to the outside of the battery outer casing 160 and all the negative electrode collectors 141 are connected to an external terminal 145 exposed to the outside of the battery outer casing 160. Therefore, it can be said that four battery units are connected in parallel in the lithium ion battery 200.

The positive electrode composition, the negative electrode composition, the positive electrode collector, and the negative electrode collector used for the method for manufacturing a lithium ion battery using the separator for lithium ion battery of the present invention are described.

The positive electrode composition contains a positive electrode active material and may contain a conductive assistant or an electrolytic solution as necessary. Examples of the positive electrode active material include composite oxides of lithium and transition metals, lithium containing transition metal phosphates, transition metal oxides, transition metal sulfides, conductive polymers, and the like and two or more kinds thereof may be used in combination. Examples of the composite oxides of lithium and transition metals include composite oxides containing one kind of transition metal, composite oxides containing two kinds of transition metal elements, composite oxides containing three or more kinds of metal elements, and the like. Examples of the composite oxides containing one kind of transition metal include LiCoO₂, LiNiO₂, LiAlMnO₄, LiMnO₂, and LiMn₂O₄, and the like. Examples of the composite oxides containing two kinds of transition metal elements include LiFeMnO₄, LiNi₁₋ₓCoₓO₂, LiMn_{1-y}Co_{y}O₂, LiNi_{1/3}Co_{1/3}Al_{1/3}O₂, LiNi_{0.8}Co_{0.1,5}Al_{0.05}O₂, and the like, for example. Examples of the composite oxides containing three or more kinds of metal elements include LiMₐM'_{b}M"_{c}O₂ (M, M', and M" are different transition metal elements and satisfy a + b + c = 1. For example, LiNi_{1/3}Mn_{1/3}Co_{1/3}O₂ is mentioned.) and the like, for example. Examples of the lithium containing transition metal phosphates include LiFePO₄, LiCoPO₄, LiMnPO₄, LiNiPO₄, and the like, for example. Examples of the transition metal oxides include MnO₂, V₂O₅, and the like, for example. Examples of the transition metal sulfides include MoS₂, TiS₂, and the like, for example. Examples of the conductive polymers include polyaniline, polyvinylidene fluoride, polypyrrole, polythiophene, polyacetylene, poly-p-phenylene, polycarbazole, and the like, for example. The lithium containing transition metal phosphates may be those in which a part of the transition metal site is substituted with other transition metals.

From the viewpoint of the electric characteristics of the battery, the volume average particle diameter of the positive electrode active material for lithium ion battery is preferably 0.01 to 100 µm, more preferably 0.1 to 35 µm, and still more preferably 2 to 30 µm.

The negative electrode composition contains a negative electrode active material and may contain a conductive assistant and an electrolytic solution as necessary. Examples of the negative electrode active material include carbon materials, silicon materials, conductive polymers, metals, metal oxides, metal alloys, and the like, mixtures of these substances and carbon materials, and the like. Examples of the carbon materials include graphite, non-graphitizable carbon, amorphous carbon, and resin fired bodies (for example, those obtained by firing and carbonizing a phenol resin, a furan resin, and the like), coke (for example, pitch coke, needle coke, petroleum coke, and the like), carbon fibers, and the like. Examples of the silicon materials include silicon, silicon oxides (SiOx), silicon-carbon composites (those obtained by covering the surface of carbon particles with silicon and/or silicon carbides, those obtained by covering the surface of silicon particles or silicon oxide particles with carbon and/or silicon carbides, silicon carbides, and the like), silicon alloys (silicon-aluminum alloy, silicon-lithium alloy, silicon-nickel alloy, silicon-iron alloy, silicon-titanium alloy, silicon-manganese alloy, silicon-copper alloy, silicon-tin alloy, and the like), for example. Examples of the conductive polymers include polyacetylene, polypyrrole, and the like, for example. Examples of the metals include tin, aluminum, zirconium, titanium, and the like. Examples of the metal oxides include titanium oxides, lithium·titanium oxides, and the like. Examples of the metal alloys include a lithium-tin alloy, a lithium-aluminum alloy, a lithium-aluminum-manganese alloy, and the like, for example. Those not containing lithium or lithium ions thereinside among the negative electrode active materials may be subjected to pre-doping treatment of impregnating a part or the entire of the negative electrode active materials with lithium or lithium ions beforehand.

Among the above, the carbon materials, the silicon materials, and the mixtures thereof are preferable from the viewpoint of the battery capacity. The carbon materials are more preferably the graphite, the non-graphitizable carbon, and the amorphous carbon. The silicon materials are more preferably the silicon oxides and the silicon-carbon composites.

The volume average particle diameter of the negative electrode active material is preferably 0.01 to 100 µm, more preferably 0.1 to 20 µm, and still more preferably 2 to 10 µm from the viewpoint of the electric characteristics of the battery.

The volume average particle diameter of the positive electrode active material and the negative electrode active material as used in this specification means a particle diameter at an integrated value of 50% (Dv50) in the particle size distribution determined by a Microtrac method (laser diffraction·scattering method). The Microtrac method is a method for determining the particle size distribution using scattered light obtained by irradiating the particles with laser light. For the measurement of the volume average particle diameter, a Microtrac manufactured by Nikkiso Co., Ltd., and the like are usable.

The conductive assistant is selected from materials having conductivity. Specifically, metals, carbon, mixtures thereof, and the like are mentioned but the conductive assistant is not limited thereto. Examples of the metals include nickel, aluminum, stainless steel (SUS), silver, copper, titanium, and the like. Examples of the carbon include graphite, carbon black (acetylene black, Ketchen black (Registered Trademark), furnace black, channel black, and thermal lamp black, and the like), and the like. The conductive assistants may be used alone or may be used in combination of two or more kinds thereof. Alloys or metal oxides of these metals may be used. From the viewpoint of electric stability, aluminum, stainless steel, carbon, silver, copper, titanium, and mixtures thereof are preferable, silver, aluminum, stainless steel, and carbon are more preferable, and carbon is still more preferable. The conductive assistants may be those obtained by coating the periphery of particle (particle shape) ceramic materials or particle (particle shape) resin materials with conductive materials (metal materials among the materials of the conductive assistants) by plating or the like.

The average particle diameter of the conductive assistant is not particularly limited and is preferably 0.01 to 10 µm, more preferably 0.02 to 5 µm, and still more preferably 0.03 to 1 µm from the viewpoint of the electric characteristics of the battery. The "particle diameter" as used in this specification means the maximum distance L among the distances between arbitrary two points on the outline of the conductive assistant. As a value of the "average particle diameter", a value calculated as an average value of the particle diameters of particles observed in several to dozens of visual fields using observation means, such as a scanning electron microscope (SEM) or a transmission electron microscope (TEM), is adopted.

The shape (form) of the conductive assistant is not limited to the particle form and may be forms other than the particle form and may be a form practically used as a so-called filler conductive resin composition, such as carbon nanotube.

The conductive assistant may be a conductive fiber the shape of which is a fibrous shape. Examples of the conductive fibers include carbon fibers, such as PAN carbon fibers and pitch carbon fibers, conductive fibers obtained by uniformly dispersing metals or graphite having good conductivity into synthetic fibers, metals fiber obtained by fiberizing metals, such as stainless steel, conductive fibers obtained by covering the surface of organic fibers with metals, conductive fibers obtained by covering the surface of organic fibers with a resin containing a conductive substance, and the like. Among the conductive fibers, the carbon fibers are preferable. Moreover, a polypropylene resin in which graphene is kneaded is also preferable. When the conductive assistant is the conductive fiber, the average fiber diameter is preferably 0.1 to 20 µm.

The positive electrode active material and the negative electrode active material (hereinafter also collectively referred to as an electrode active material) may be covered active materials at least one part of the surface of which are covered with a cover layer containing polymer compounds. When the periphery of the electrode active material is covered with the cover layer, volume changes of the electrode is reduced and the expansion of the electrode can be suppressed. Furthermore, the wettability to a nonaqueous solvent of the covered active material can be improved, so that the time taken for a process of causing the covered active material layer possessed by the electrode to absorb an electrolytic solution can be shortened. The covered active material when the positive electrode active material is used as the electrode active material is referred to as a covered positive electrode active material and the covered active material layer is also referred to as a covered positive electrode active material layer. The covered active material when the negative electrode active material is used as the electrode active material is referred to as a covered negative electrode active material and the covered active material layer is also referred to as a covered negative electrode active material layer.

As the polymer compound configuring the cover layer, one described as a resin for coating nonaqueous secondary battery active materials in Japanese Patent Application Laid-Open No. 2017-054703 can be suitably used.

### (Electrolytic solution)

As the electrolytic solution, known electrolytic solutions containing an electrolyte and a nonaqueous solvent used for the manufacturing of the lithium ion battery are usable.

As the electrolyte, those used for the known electrolytic solutions are usable. For example, lithium salts of inorganic acids, such as LiPF₆, LiBF₄, LiSbF₆, LiAsF₆, and LiClO₄, lithium salts of organic acids, such as LiN(CF₃SO₂)₂, LiN(C₂F₅SO₂)₂, and LiC(CF₃SO₂)₃, and the like are mentioned. Among the above, LiPF₆ is preferable from the viewpoint of the battery output and the charge/discharge cycle characteristics.

As the nonaqueous solvent, those used for the known electrolytic solutions and the like are usable. For example, lactone compounds, cyclic or chain carbonates, chain carboxylates, cyclic or chain ethers, phosphates, nitrile compounds, amide compounds, sulfones, sulfolane, and the like and mixtures thereof are usable.

As the lactone compounds, five-membered ring lactone compounds (y-butyrolactone, γ-valerolactone, and the like) and six-membered ring lactone compounds (δ-valerolactone, and the like), for example, can be mentioned.

Examples of the cyclic carbonates include propylene carbonate, ethylene carbonate, butylene carbonate, and the like. Examples of the chain carbonates include dimethyl carbonate, methyl ethyl carbonate, diethyl carbonate, methyl-n-propyl carbonate, ethyl-n-propyl carbonate, di-n-propyl carbonate, and the like.

Examples of the chain carboxylates include methyl acetate, ethyl acetate, propyl acetate, methyl propionate, and the like. Examples of the cyclic ethers include tetrahydrofuran, tetrahydropyran, 1,3-dioxolane, 1,4-dioxane, and the like. Examples of the chain ethers include dimethoxy methane, 1,2-dimethoxy ethane, and the like.

Examples of the phosphates include trimethyl phosphate, triethyl phosphate, ethyl dimethyl phosphate, diethyl methyl phosphate, tripropyl phosphate, tributyl phosphate, triphosphate (trifluoromethyl), triphosphate (trichloromethyl), triphosphate (trifluoroethyl), triphosphate (triperfluoroethyl), 2-ethoxy-1,3,2-dioxaphospholane-2-one, 2-trifluoroethoxy-1,3,2-dioxaphospholane-2-one, and 2-methoxyethoxy-1,3,2-dioxaphospholane-2-one, and the like. Examples of the nitrile compounds include acetonitrile and the like. Example of the amide compounds include N,N-dimethyl formamide (DMF) and the like. Examples of the sulfones include dimethyl sulfone, diethyl sulfone, and the like. The nonaqueous solvents may be used alone or in combination of two or more kinds thereof.

Among the nonaqueous solvents, the lactone compounds, the cyclic carbonates, the chain carbonates, and the phosphates are preferable from the viewpoint of the battery output and the charge/discharge cycle characteristics. The lactone compounds, the cyclic carbonates, and the chain carbonates are more preferable and mixed liquids of the cyclic carbonates and the chain carbonates are particularly preferable. A mixed liquid of ethylene carbonate (EC) and dimethyl carbonate (DMC) or a mixed liquid of ethylene carbonate (EC) and diethyl carbonate (DEC) is the most preferable.

Examples of the positive electrode collector and the negative electrode collector include metallic foil of copper, aluminum, titanium, stainless steel, nickel, and the like, a resin collector containing a conductive polymer (described in Japanese Patent Application Laid-Open No. 2012-150905, for example), a conductive carbon sheet, a conductive glass sheet, and the like.

A method for manufacturing the above-described covered active material is described. The covered active material may also be manufactured by mixing a polymer compound and an electrode active material and a conducting agent, which is used as necessary, for example. When the conducting agent is used for the cover layer, the covered active material may also be manufactured by mixing a polymer compound and a conducting agent to prepare a covering material, and then mixing the covering material and an electrode active material or may also be manufactured by mixing a polymer compound, a conducting agent, and an electrode active material. When the electrode active material, the polymer compound, and the conducting agent are mixed, a mixing order is not particularly limited. However, it is preferable to mix the electrode active material and the polymer compound, and further add the conducting agent, followed by further mixing. By the above-described method, at least one part of the surface of the electrode active material is covered with the cover layer containing the polymer compound and the conducting agent, which is used as necessary.

As the conducting agent which is an arbitrary component of the covering material, the same substance as the conductive assistants configuring the electrode composition can be suitably used.

### Examples

Next, the present invention is specifically described according to Examples. However, the technical scope of the present invention is not limited to Examples without deviating the gist of the present invention. Unless otherwise specified, part(s) means "part(s) by weight" and % means "% by mass".

### [Manufacturing Example 1: Manufacturing of separator body]

A flat plate-like Celgard 2500 (formed of polypropylene (PP), 25 µm in thickness) was cut out in a 14 mm × 14 mm square to be used as a separator body.

### (Example 1)

### [Production of frame-like member]

An adhesive polyolefin resin film serving as a seal layer was superposed on both surfaces of a polyethylene naphthalate film serving as a heat resistant annular support member. The heat resistant annular support member and the seal layers were bonded to each other by a heating roll to prepare a laminate. Thereafter, the laminate was cut into a 15 mm × 15 mm square, and further a 11 mm × 11 mm region in the center was punched out. Thus, an annular laminate (frame-like member) was obtained in which the heat resistant annular support member containing PEN (PEN layer) and the seal layers were laminated and the width in four sides of the square was 2 mm. For the polyethylene naphthalate film, a PEN film manufactured by Teijin, Ltd., Teonex (Registered Trademark) Q51, 250 µm in thickness was used. For the adhesive polyolefin resin film, ADMER (Registered Trademark) VE300 manufactured by Mitsui Chemicals, Inc., 50 µm in thickness was used.

### [Joining of separator body and frame-like member]

The frame-like member was superposed on one surface of the separator body so that the center of gravity based on the outside dimension of the frame-like member and the center of gravity based on the outside dimension of the separator body were overlapped with each other and so that one seal layer (used as a second seal layer) of each frame-like member contacted the separator body. The frame-like member was heated by an impulse sealer to be melted and bonded to the separator body, so that a separator for lithium ion battery according to Example 1 was obtained in which the frame-like member was annularly disposed on one surface along the outer periphery of the separator body. The first seal layer is a seal layer on the surface opposite to the second seal layer. The first seal layer was used as a seal layer on a side contacting a positive electrode collector. The second seal layer was used as a seal layer on a side contacting a negative electrode collector. The second seal layer is disposed in a 0.5 mm wide portion on the inner side from the outer periphery of the frame-like member. In a 1.5 mm wide portion on the outer side from the frame-like member, the separator body is bonded by the second seal layer and laminated. Since the frame-like member is formed in an outer peripheral portion of the separator body, the separator for lithium ion battery according to Example 1 is free from bending or wrinkles in handling, maintains the plane, and is excellent in handling properties (Evaluation of handling properties: ○).

### (Examples 2 to 4)

In the [Production of frame-like member], the heat resistant annular support member was changed into a polyethylene naphthalate film, a polyetheretherketone film, and a glass epoxy laminated sheet, respectively. Separators for lithium ion battery according to Examples 2 to 4 were obtained according to the same procedure as that of Example 1, except the changes. The handling properties were the same as those of the separator for lithium ion battery according to Example 1 (Evaluation of handling properties: ○). For the polyethylene naphthalate film, a PEN film manufactured by Teijin, Ltd., Teonex (Registered Trademark) Q51, 125 µm in thickness was used. For the polyetheretherketone film, a PEEK film manufactured by Shin-Etsu Polymer Co., Ltd., Sepla (Shin-Etsu Sepla Film (Registered Trademark)), 50 µm in thickness was used. For the glass epoxy laminated sheet, SUMILITE (Registered Trademark) EL manufactured by Sumitomo Bakelite Co., Ltd., 100 µm in thickness was used.

### (Example 5)

Two frame-like members and the separator body obtained in Example 2 were used. The frame-like member was superposed on each of both surfaces of the separator body so that the center of gravity based on the outside dimension of the frame-like member and the center of gravity based on the outside dimension of the separator body were overlapped with each other and so that one seal layer of the frame-like member contacted the separator body. The frame-like member was heated by an impulse sealer to be melted and bonded to the separator body, so that a separator was obtained in which the frame-like member was disposed on both the surfaces along the outer periphery of the separator body. The seal layer contacting a positive electrode collector of the seal layers possessed by the frame-like member disposed on both the surfaces of the separator body is used as a first seal layer and the seal layer thereof contacting a negative electrode collector is used as a second seal layer. In a 0.5 mm portion on the inner side from the outer periphery of the frame-like member, the two frame-like members face each other through the separator body. Since the frame-like member is formed in an outer peripheral portion of the separator body, the separator for lithium ion battery according to Example 5 is free from bending or wrinkles in handling and excellent in handling properties (Evaluation of handling properties: ○).

### (Comparative Example 1)

The separator body obtained in Manufacturing Example 1 was used as it was as a separator for lithium ion battery according to Comparative Example 1. When raised, the separator for lithium ion battery according to Comparative Example 1 was easily bent, and thus the handling properties were inferior to the separators for lithium ion battery according to Examples 1 to 5 (Evaluation of handling properties: ×).

### [Measurement of thermal deformation resistance of separator]

The separators for lithium ion battery according to Examples 1 to 5 were placed between a 50 µm thick copper foil and a 50 µm thick aluminum foil. Each side of a region where the frame-like member was present was heated for 2 seconds from above the copper foil and the aluminum foil using an impulse sealer set to 200°C to thermally press-bond the metallic foil and the frame-like member to thereby produce pseudo cells containing no active material layer. On both surfaces of the separator for lithium ion battery according to Comparative Example 1, a frame-like (2 mm in width) adhesive polyolefin resin film which has a square shape having an outside dimension of 15 mm × 15 mm and in which a 11 mm × 11 mm region in the center was punched out was superposed. In detail, the film was laminated so that the center of gravity based on the outside dimension of the separator for lithium ion battery and the center of gravity based on the outside dimension of the adhesive polyolefin resin film were overlapped with each other. Furthermore, the upper and lower surfaces thereof were placed between 50 µmn thick copper foil and 50 µm thick aluminum foil. Each side of a region where the frame-like adhesive polyolefin resin film was present was heated for 2 seconds from above the copper foil and the aluminum foil using an impulse sealer set to 200°C to thermally press-bond the metallic foil and the frame-like adhesive polyolefin resin film. Thus, a pseudo cell containing no active material layer was produced. The appearance of each produced pseudo cell was observed to evaluate the thermal deformation resistance. The results are illustrated in Table 1. In the results of Table 1, ○ means that a change (distortion) in the outer shape due to the thermal bonding did not occur and × means that a change (distortion) in the outer shape due to the thermal bonding occurred and wrinkles or shrinkage occurred in the separator body. For the adhesive polyolefin resin film, ADMER (Registered Trademark) VE300 manufactured by Mitsui Chemicals, Inc., 50 µm in thickness was used.

**[Table 1]**

| | Frame-like member | | | Arrangement of frame-like member | Evaluation | |
|---|---|---|---|---|---|---|
| | Heat resistant annular support member | | | | Handling properties | Thermal deformation resistance |
| | Heat resistant resin composition | Melting temperature [°C] | Thickness [mm] | | | |
| Ex. 1 | PEN film | 260 | 250 | One side | ○ | ○ |
| Ex. 2 | PEN film | 260 | 125 | One side | ○ | ○ |
| Ex. 3 | PEEK film | 330 | 50 | One side | ○ | ○ |
| Ex. 4 | Glass epoxy laminated sheet | - | 100 | One side | ○ | ○ |
| Ex. 5 | PEN film | 260 | 250 | Both sides | ○ | ○ |
| Comp. Ex. 1 | - | - | - | - | × | × |

It can be said from the results of Table 1 that the lithium ion battery using the separator for lithium ion battery of the present invention is excellent in handling properties and thermal deformation resistance.

### Industrial availability

The separator for lithium ion battery of the present invention is useful particularly as separators for bipolar secondary battery, lithium-ion secondary battery, and the like used for mobile phones, personal computers, hybrid vehicles, and electric vehicles.

This application is based on Japanese Patent Application No. 2017-176783 filed on September 14, 2017 and the entire disclosure contents are incorporated herein by reference.

### Explanation of reference numerals

- 1, 2: separator for lithium ion battery
- 10, 110: separator body
- 20, 20', 120: frame-like member
- 21, 21a, 21b: heat resistant annular support member
- 22: seal layer
- 22a: first seal layer
- 22b: second seal layer
- 30a: positive electrode composition
- 30, 130: positive electrode active material layer
- 31a: negative electrode composition
- 31,131: negative electrode active material layer
- 40, 140: positive electrode collector
- 41, 141: negative electrode collector
- 100, 100', 200: lithium ion battery
- 144, 145: external terminal,
- 150: positive electrode outer casing (battery outer casing)
- 151: negative electrode outer casing (battery outer casing)
- 160: battery outer casing

## Claims

1. A separator for lithium ion battery, which is disposed between a flat plate-like positive electrode collector and a flat plate-like negative electrode collector, the separator for lithium ion battery, comprising:
a sheet-like separator body containing a polyolefin porous membrane; and
a frame-like member annularly disposed along an outer periphery of the separator body, wherein
the frame-like member contains a heat resistant annular support member and a seal layer which is disposed on a surface of the heat resistant annular support member and which can be thermocompression-bonded to the positive electrode collector or the negative electrode collector.

2. The separator for lithium ion battery according to Claim 1, wherein
the heat resistant annular support member contacts the separator body and contains a heat resistant resin composition having a melting temperature measured by differential scanning calorimetry according to JIS K7121-1987 of 150°C or more.

3. The separator for lithium ion battery according to Claim 2, wherein
the heat resistant resin composition contains at least one kind of resin selected from the group consisting of polyamide, polyethylene terephthalate, polyethylene naphthalate, high melting point polypropylene, polycarbonate, and polyetheretherketone.

4. The separator for lithium ion battery according to any one of Claims 1 to 3, wherein
the seal layer contains a first seal layer which can be thermocompression-bonded to the positive electrode collector and a second seal layer which can be thermocompression-bonded to the negative electrode collector, and
the frame-like member is a laminate in which the heat resistant annular support member is disposed between the first seal layer and the second seal layer.
